(19) Europäisches Patentamt
European Patent Office
Office européen des brevets

(11) EP 1 003 807 B1

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(21) Anmeldenummer: **98938711.3**

(22) Anmeldetag: **29.07.1998**

(51) Int Cl.7: **C08K 5/523**, C08L 69/00

(86) Internationale Anmeldenummer:
**PCT/EP98/04732**

(87) Internationale Veröffentlichungsnummer:
**WO 99/007778 (18.02.1999 Gazette 1999/07)**

(54) **FLAMMWIDRIGE, VERSTÄRKTE POLYCARBONAT-ABS-FORMMASSEN**

FLAME-RESISTANT REINFORCED POLYCARBONATE ABS MOULDING MATERIALS

MATIERES MOULABLES EN POLYCARBONATE-ABS RENFORCEES ET RESISTANTES A LA FLAMME

(84) Benannte Vertragsstaaten:
**BE CH DE DK ES FR GB IT LI NL**

(30) Priorität: **11.08.1997 DE 19734667**

(43) Veröffentlichungstag der Anmeldung:
**31.05.2000 Patentblatt 2000/22**

(73) Patentinhaber: **Bayer Aktiengesellschaft
51368 Leverkusen (DE)**

(72) Erfinder:
- **ECKEL, Thomas
D-41540 Dormagen (DE)**
- **WITTMANN, Dieter
D-51375 Leverkusen (DE)**
- **KELLER, Bernd
D-47608 Geldern (DE)**
- **ALBERTS, Heinrich
D-51519 Odenthal (DE)**

(56) Entgegenhaltungen:

| | |
|---|---|
| **EP-A- 0 000 186** | **EP-A- 0 103 230** |
| **EP-A- 0 390 064** | **EP-A- 0 640 655** |
| **EP-A- 0 769 526** | **US-A- 3 166 606** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft mit organischen Phosphorverbindungen flammwidrig ausgerüstete, verstärkte Polycarbonat-ABS-Formmassen, die ein ausgezeichnetes mechanisches Eigenschaftsniveau aufweisen.

Verstärkte flammwidrig ausgerüstete Polycarbonat-ABS-Formmassen sind bereits bekannt.

So werden in der EP-A-0 754 531 u.a. flammwidrige Formmassen aus Polycarbonat, ABS-Pfropfpolymerisat und gegebenenfalls SAN-Copolymerisaten beschrieben, die mit blättchenförmigen, anorganischen Materialien verstärkt sind.

Flammwidrige Polymermischungen aus aromatischem Polycarbonat, styrolhaltigem Copolymer und/oder Pfropfpolymer, oligomeren Phosphaten als Flammschutzmittel und Fasern als Verstärkungsmaterialien, sind aus der EP-A-0 363 608 bekannt.

Die Lehre der EP-A-0 640 655 befaßt sich mit flammwidrigen Formmassen aus aromatischen Polycarbonaten, styrolhaltigen Copolymeren, Pfropfpolymeren, und einer Mischung aus Mono- und oligomeren Phosphaten, die gegebenenfalls Glasfasern als Verstärkungsmaterialien enthalten können.

Für bestimmte Einsatzzwecke, wie für die Herstellung von Formkörpern mit erhöhter mechanischer Beanspruchung oder für Formkörper mit dünner Wandstärke zeigen die bekannten Formmassen ein nicht ausreichendes Eigenschaftsniveau, insbesondere eine zu geringe Steifigkeit oder zu geringes Fließverhalten.

Aufgabe der vorliegenden Erfindung war es deshalb, flammwidrige, verstärkte Polycarbonat-ABS-Formmassen bereitzustellen, die einen ausgezeichneten E-Modul neben einer sehr guten Flammfestigkeit, sehr gute Verarbeitungseigenschaften und einem hohen mechanischen Eigenschaftsniveau aufweisen.

Es wurde nun überraschenderweise gefunden, daß bei Verwendung bestimmter Gemische von Polycarbonaten mit jeweils deutlich unterschiedlichen Lösungsviskositäten Polycarbonat-ABS-Pormmassen resultieren, die einen deutlich besseren E-Modul, eine höhere Kerbschlagzähigkeit und ein besseres Verarbeitungsverhalten gegenüber Formmassen aufweisen, die als Polycarbonatkomponente nur ein Polycarbonat mit einer entsprechenden durchschnittlichen Lösungsviskosität enthalten.

Gegenstand der Erfindung sind daher flammwidrige, verstärkte thermoplastische Formmassen, enthaltend

A. 5 bis 95, vorzugsweise 10 bis 90, besonders bevorzugt 20 bis 80 Gew.-Teile eines Gemisches zweier aromatischer Polycarbonate A.1 und A.2 mit unterschiedlicher Lösungsviskosität, wobei

1. die relative Lösungsviskosität von A.1 1,18 bis 1,24 beträgt,

2. die relative Lösungsviskosität von A.2 1,24 bis 1,34 beträgt und

3. die Differenz der relativen Lösungsviskositäten von A.1 und A.2 größer oder gleich 0,06 ist,

wobei ein oder mehrere weitere Polycarbonate dem Gemisch aus A.1 und A.2 zugesetzt werden können,

B. 0 bis 50, vorzugsweise 1 bis 30, besonders bevorzugt 2 bis 25 Gew.-Teile, eines Vinyl(co)polymerisates aus einem oder wenigstens zwei ethylenisch ungesättigten Monomeren,

C. 0,5 bis 60, vorzugsweise 1 bis 40, besonders bevorzugt 2 bis 30 Gew.-Teile Pfropfpolymerisat mit einer Glasübergangstemperatur $<-10°C$ erhältlich durch Pfropfpolymerisation von mindestens 2 der Monomeren ausgewählt aus Chloropren, Butadien, Isopren, Styrol, Acrylnitril, Ethylen, Propylen, Vinylacetat und (Meth)-Acrylsäureester mit 1 bis 18 C-Atomen in der Alkoholkomponente,

D. 0,5 bis 20 Gew.-Teilen, bevorzugt 1 bis 18 Gew.-Teilen, besonders bevorzugt 2 bis 15 Gew.-Teilen Phosphorverbindung der Formel (I)

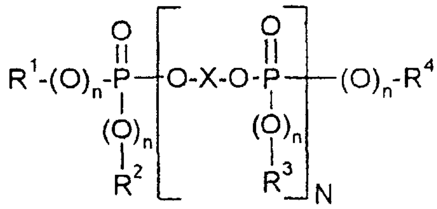

(I),

worin

| | |
|---|---|
| $R^1$, $R^2$, $R^3$ und $R^4$ | unabhängig voneinander, gegebenenfalls halogeniertes $C_1$-$C_4$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| n | unabhängig voneinander 0 oder 1, |
| N | 0 bis 30 und |
| X | einen ein- oder mehrkernigen aromatischen Rest mit 6 bis 30 C-Atomen bedeuten, |

E. 0,05 bis 5 Gew.-Teilen, vorzugsweise 0,1 bis 1 Gew.-Teil, besonders bevorzugt 0,1 bis 0,5 Gew.-Teilen fluoriertes Polyolefin und

F. 1 bis 40, vorzugsweise 3 bis 30, besonders bevorzugt 5 bis 20 Gew.-Teile anorganisches, vorzugsweise faserförmiges Verstärkungsmaterial.

Die Summe aller Gewichtsteile A+B+C+D+E+F ergibt 100.

**Komponente A**

Erfindungsgemäß geeignete, thermoplastische, aromatische Polycarbonate als Komponente A sind solche auf Basis der Diphenole der Formel (II)

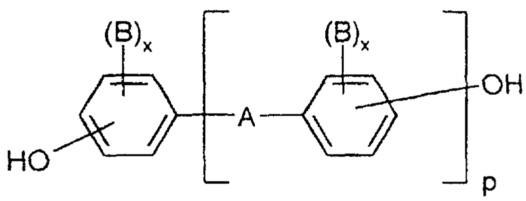

(II),

worin

A eine Einfachbindung, $C_1$-$C_5$-Alkylen, $C_2$-$C_5$-Alkyliden, $C_5$-$C_6$-Cycloalkyliden, -S-, $-SO_2-$, -O-, -CO- oder ein $C_6$-$C_{12}$-Arylen-Rest, der gegebenenfalls mit weiteren, Heteroatome enthaltenden aromatischen Ringen kondensiert sein kann,

B unabhängig voneinander, jeweils $C_1$-$C_8$-Alkyl, vorzugsweise Methyl, Ethyl, $C_6$-$C_{10}$-Aryl, bevorzugt Phenyl, $C_7$-$C_{12}$-Aralkyl, bevorzugt Benzyl, Halogen, bevorzugt Chlor, Brom,

x unabhängig voneinander, jeweils 0, 1 oder 2 und

p 1 oder 0 bedeuten,

oder alkylsubstituierte Dihydroxyphenylcycloalkane der Formel (III)

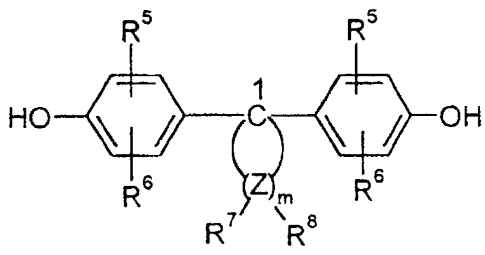

(III),

worin

$R^5$ und $R^6$ unabhängig voneinander, jeweils Wasserstoff, Halogen, bevorzugt Chlor oder Brom, $C_1$-$C_8$-Alkyl, bevorzugt Methyl, Ethyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^7$ und $R^8$ für jedes Z individuell wählbar, unabhängig voneinander Wasserstoff oder $C_1$-$C_6$-Alkyl, vorzugsweise Wasserstoff, Methyl oder Ethyl,
und

Z Kohlenstoff bedeutet, mit der Maßgabe, daß an mindestens einem Atom Z $R^7$ und $R^8$ gleichzeitig Alkyl bedeuten.

Geeignete Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (III) sind Dihydroxydiphenylcycloalkane mit 5 und 6 Ring-C-Atomen im cycloaliphatischen Rest [(m = 4 oder 5 in Formel (III)] wie beispielsweise die Diphenole der Formeln

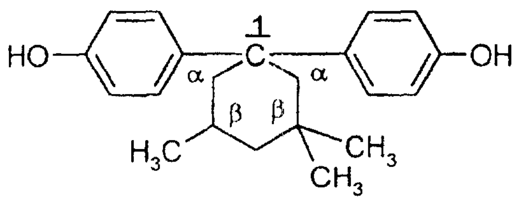

(IIIa),

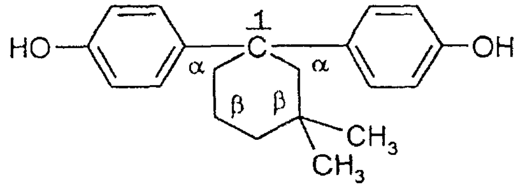

(IIIb)

und

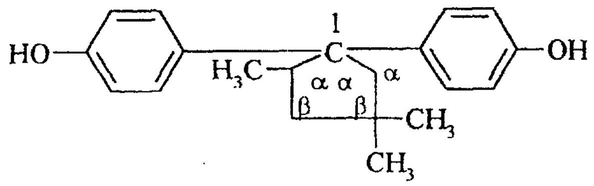

(IIIc).

wobei das 1,1-Bis-(4-hydroxyphenyl)-3,3,5-trimethylcyclohexan (Formel IIIa) besonders bevorzugt ist.

Die erfindungsgemäß geeigneten Polycarbonate gemäß Komponente A können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, z.B. solchen mit drei oder mehr als drei phenolischen Gruppen, beispielsweise

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-((4-hydroxyphenyl)-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4',4"-Dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Polycarbonate sind neben dem Bisphenol-A-Homopolycarbonat die Copolycarbonate von Bisphenol A mit bis zu 15 mol-%, bezogen auf die mol-Summe an Diphenolen, an 2,2-Bis-(3,5-dibrom-4-hydroxyphenyl)-propan.

Die aromatischen Polycarbonate der Komponente A können teilweise durch aromatische Polyestercarbonate ausgetauscht werden.

Die aromatischen Polycarbonate der Komponente A können auch Polysiloxan-Blöcke enthalten. Deren Herstellung wird beispielsweise in der DE-OS 33 34 872 und in der US-PS 3 821 325 beschrieben.

Aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate und/oder aromatischer Polyestercarbonate kann z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung der Kettenabbrecher und gegebenenfalls unter Verwendung der trifunktionellen oder mehr als trifunktionellen Verzweiger erfolgen.

Bezogen auf das Gemisch der Polycarbonate A.1 und A.2 beträgt der Anteil A.1 5 bis 95, vorzugsweise 25 bis 75 Gew.-%, insbesondere 35 bis 65 Gew.-%, und der Gewichtsanteil A.2 95 bis 5, vorzugsweise 75 bis 25 Gew.-%, insbesondere 65 bis 35 Gew.-%.

Das Gemisch der Polycarbonate A.1 und A.2 zeichnet sich dadurch aus, daß die relative Lösungsviskosität von A.1 1,18 bis 1,24 beträgt, daß die relative Lösungsviskosität von A.2 1,24 bis 1,34 beträgt und daß die Differenz der relativen Lösungsviskositäten von A.1 und A.2 größer oder gleich 0,06, insbesondere größer oder gleich 0,09 ist, d.h. relative Lösungsviskosität (A.2) minus relative Lösungsviskosität (A.1) $\geq$0,06, insbesondere $\geq$0,09. Die relative Lösungsviskosität wird gemessen in $CH_2Cl_2$ als Lösungsmittel bei 25°C bei einer Konzentration von 0,5 g/100 ml.

Vorzugsweise haben die Polycarbonate A.1 und A.2 dieselben Strukturen, d.h. sie sind aus den gleichen Monomeren aufgebaut. Besonders bevorzugt sind sowohl die Polycarbonate A.1 und A.2 als auch weiteres zugesetztes Polycarbonat (wie oben für A.1 und A.2 beschrieben) aus denselben Monomeren aufgebaut und haben die gleiche Struktur. Ein weiteres Polycarbonat wird vorzugsweise bis zu einer Menge von 30 Gew.-% (bezogen auf die Menge an A.1 und A.2) zugesetzt.

Eine oder beide Polycarbonat-Bestandteile A.1 oder A.2 im Gemisch können ein recycliertes Polycarbonat sein. Unter recycliertem Polycarbonat werden solche Produkte verstanden, die bereits einen Verarbeitungs- und Lebenszyklus hinter sich haben und durch spezielle Aufarbeitungsverfahren von anhaftenden Verunreinigungen soweit befreit worden sind, so daß sie für weitere Anwendungen geeignet sind.

**Komponente B**

Das thermoplastische Polymer B, das gegebenenfalls in den erfindungsgemäßen Formmassen vorhanden ist, umfaßt (Co)Polymere von einem oder wenigstens zwei ethylenisch ungesättigten Monomeren (Vinylmonomeren) wie beispielsweise Styrol, $\alpha$-Methylstyrol, kernsubstituierte Styrole, (z.B. halogen- und/oder alkylkernsubstituiert) Acrylnitril, Methacrylnitril, Methylmethacrylat, Maleinsäureanhydrid. N-substituierte Maleinimide und (Meth)-Acrylsäureester mit 1 bis 18 C-Atomen in der Alkoholkomponente.

Die (Co)Polymerisate gemäß Komponente B sind harzartig, thermoplastisch und kautschukfrei. Die Formmasse kann auch verschiedene (Co)Polymerisate B enthalten.

Bevorzugte Vinyl-(Co)polymerisate B sind solche aus wenigstens einem Monomeren aus der Reihe Styrol, $\alpha$-Methylstyrol und/oder kernsubstituiertem Styrol und/oder Methylmethacrylat (B.1) mit wenigstens einem Monomeren aus der Reihe Acrylnitril, Methacrylnitril, Methylmethacrylat, Maleinsäureanhydrid und/oder N-alkyl- und N-arylsubstituiertem Maleinimid (B.2)

Der Gehalt an Monomeren B.1 im (Co)Polymer beträgt vorzugsweise 50 bis 99, besonders bevorzugt 60 bis 95 Gew.-% der Monomeren B.2, vorzugsweise 1 bis 50, besonders bevorzugt 40 bis 5 Gew.-%.

Besonders bevorzugte Copolymerisate B sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenfalls mit Methylmethacrylat.

Die (Co)Polymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $\overline{M}_w$ (Gewichtsmittel, ermittelt durch Lichtstreuung oder Sedimentation) zwischen 15.000 und 200.000.

Besonders bevorzugte erfindungsgemäße Copolymerisate B sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie $\alpha$-Methylstyrol, enthalten.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60.000 bis 200.000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

**Komponente C**

Die erfindungsgemäße Komponente C stellt Pfropfpolymerisate dar, welche auch als Gemisch in der Formmasse enthalten sein können. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80 Gew.-Teilen einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-Alkyl bzw. Phenyl-N-substituierten Maleinimiden oder Mischungen dieser Verbindungen auf

C.2 5 bis 95, vorzugsweise 20 bis 70 Gew.-Teilen Polymerisat auf Dienund/oder Alkylacrylat-Basis mit einer Glasübergangstemperatur unter -10°C.

Bevorzugte Pfropfpolymerisate C sind z.B. mit Styrol und/oder Acrylnitril und/oder (Meth)Acrylsäurealkylestern gepfropfte Grundlagen C.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C sind z.B. ABS-Polyymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate C sind erhältlich durch Pfropfreaktion von

α 10 bis 70, vorzugsweise 15 bis 50, insbesondere 20 bis 40 Gew.-%, bezogen auf Pfropfpolymerisat C, mindestens eines (Meth)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)Acrylsäureester und 50 bis 90, vorzugsweise 65 bis 80 Gew.-%, bezogen auf Gemisch, Styrol, als Pfropfauflage C.1 auf

β 30 bis 90, vorzugsweise 50 bis 85, insbesondere 60 bis 80 Gew.-%, bezogen auf Pfropfpolymerisat C, eines Butadienpolymerisats mit mindestens 50 Gew.-%, bezogen auf β, Butadienresten als Pfropfgrundlage C.2,

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats C.2 0,05 bis 2 µm, vorzugsweise 0,1 bis 0,6 µm beträgt.

(Meth)Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

τ. 20 bis 90 Gew.-%, bezogen auf Komponente C, Acrylatkautschuk mit einer Glasübergangstemperatur <-20°C als Pfropfgrundlage C.2 und

δ. 10 bis 80 Gew.-%, bezogen auf Komponente C, mindestens eines polymerisierbaren, ethylenisch ungesättigten Monomeren als Pfropfmonomere C. 1.

Die Acrylatkautschuke τ der Polymerisate C sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrund C.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate C können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

## Komponente D

Die erfindungsgemäßen Formmassen enthalten als Flammschutzmittel wenigstens eine organische Phosphorverbindung beziehungsweise ein Gemisch von organischen Phosphorverbindungen der Formel (I)

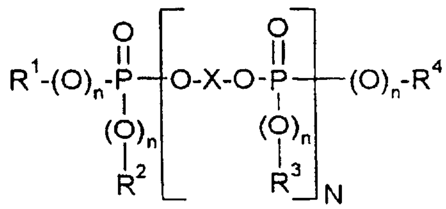

(I).

In der Formel haben $R^1$, $R^2$, $R^3$ und $R^4$ die oben angegebenen Bedeutungen. Bevorzugt stehen $R^1$, $R^2$, $R^3$ und $R^4$ unabhängig voneinander für $C_1$-$C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen, vorzugsweise Chlor oder Brom, und/oder Alkylgruppen, vorzugsweise $C_1$-$C_4$-Alkyl, z.B. Methyl, Ethyl, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (I) bedeutet einen ein- oder mehrkernigen aromatischen Rest mit 6 bis 30 C-Atomen. Dieser leitet sich vorzugsweise von Diphenolen gemäß Formel (II) ab wie z.B. Bisphenol A, Resorcin oder Hydrochinon oder deren chlorierten oder bromierten Derivaten.

n in der Formel (I) kann, unabhängig voneinander 0 oder 1 sein, vorzugsweise ist n gleich 1.

N steht für Werte von 0 bis 30, vorzugsweise von 0,3 bis 20, besonders bevorzugt 0,5 bis 10, insbesondere 0,5 bis 6.

Bei Gemischen von Phosphorverbindungen nimmt N einen durchschnittlichen Wert von 0 bis 30 an, vorzugsweise von 0,3 bis 20, besonders bevorzugt von 0,5 bis 10, insbesondere von 0,5 bis 6.

In diesem Gemisch können Monophosphorverbindungen und/oder oligomere und/oder polymere Phosphorverbindungen enthalten sein.

Im Falle von N = 0 beschreibt die Formel (I) Monophosphorverbindungen.

Insbesondere werden als Phosphorverbindung der Formel (I) organische Monophosphate wie Tributylphosphat, Tris-(2-chlorethyl)-phosphat, Tris-(2,3-dibrompropyl)-phosphat, Triphenylphosphat, Trikresylphosphat, Diphenylkresylyphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid beziehungsweise Gemische davon, eingesetzt.

Vorzugsweise werden in der Mischung monomere und oligomere Phosphorverbindungen der Formel (I) so gewählt, daß eine synergistische Wirkung erzielt wird. Die Mischung besteht im allgemeinen aus 10 bis 90 Gew.-% aus oligomeren- und aus 90 bis 10 Gew.-% aus Monophosphorverbindungen, vorzugsweise Mono-Phosphatverbindungen der Formel (I). Vorzugsweise werden die Mono-Phosphorverbindungen im Bereich von 12 bis 50, insbesondere von 14 bis 40, ganz besonders bevorzugt von 15 bis 40 Gew.-% mit der komplementären Menge an oligomeren Phosphorverbindungen gemischt.

**<u>Komponente E</u>**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1.000, vorzugsweise 0,08 bis 20 µm. Im allgemeinen haben die fluorierten Polyolefine E eine Dichte von 1,2 bis 2,3 g/cm$^3$.

Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Grow-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 kg/cm$^2$ und bei Temperaturen von 0 bis 200°C, vorzugsweise bei Temperaturen von 20 bis 100°C. (Nähere Einzelheiten siehe z.B. US-Patent 2 393 967). Je nach Einsatzform kann die Dichte dieser Materialien zwischen 1,2 und 2,3 g/cm$^3$, die mittlere Teilchengröße zwischen 0,05 und 1.000 µm liegen.

Erfindungsgemäß bevorzugte fluorierte Polyolefine E sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm$^3$. Sie werden vorzugsweise in Form einer koagulierten Mischung von Emulsionen der Tetrafluorethylenpolymerisate E mit Emulsionen der Pfropfpolymerisate C eingesetzt.

Geeignete, in Pulverform einsetzbare fluorierte Polyolefine E sind Tetrafluorethylenpolymerisate mit mittleren Teilchendurchmessern von 100 bis 1.000 µm und Dichten von 2,0 g/cm$^3$ bis 2,3 g/cm$^3$.

Zur Herstellung einer koagulierten Mischung aus C und E wird zuerst eine wäßrige Emulsion (Latex) eines Pfropfpolymerisates C mit mittleren Latexteilchendurchmessern von 0,05 bis 2 µm, insbesondere 0,1 bis 0,6µm, mit einer feinteiligen Emulsion eines fluorierten Polyolefins E in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%.

Die wäßrige Emulsion des Pfropfpolymerisats C besitzt Feststoffgehalte von 25 bis 60 Gew.-%, vorzugsweise von 30 bis 45 Gew.-%, insbesondere von 30 bis 35 Gew.-%.

Die Mengenangabe bei der Beschreibung der Komponente C schließt den Anteil des Pfropfpolymerisats in

der koagulierten Mischung aus Pfropfpolymerisat und fluorierten Polyolefinen nicht mit ein.

In der Emulsionsmischung liegt das Gewichtsverhältnis Pfropfpolymerisat C zum fluorierten Polyolefins E bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

## Komponente F

Als Komponente F werden anorganische Verstärkungsmaterialien wie Glasfasern, gegebenenfalls geschnitten oder gemahlen, Glasperlen, Glaskugeln, blättchenförmiges Verstärkungsmaterial, wie Kaolin, Talk, Glimmer, Mika, Kohlefasern oder deren Mischung eingesetzt. Vorzugsweise werden als Verstärkungsmaterial geschnittene oder gemahlene Glasfasern, vorzugsweise mit einer Länge von 1 bis 10 mm und einem Durchmesser von <20 µm, in einer Menge von 1 bis 40 Gew.-Teilen eingesetzt; vorzugsweise sind die Glasfasern oberflächenbehandelt.

Die erfindungsgemäßen Formmassen können darüber hinaus wenigstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können darüberhinaus noch feinstteilige, anorganische Pulver in einer Menge bis zu 50 Gew.-Teilen, vorzugsweise bis zu 20, insbesondere 0,5 bis 10 Gew.-Teilen, enthalten.

Feinstteilige anorganische Verbindungen bestehen aus Verbindungen eines oder mehrerer Metalle der 1. bis 5. Hauptgruppe oder 1. bis 8. Nebengruppe des Periodensystems, bevorzugt 2. bis 5. Hauptgruppe oder 4. bis 8. Nebengruppe, besonders bevorzugt 3. bis 5. Hauptgruppe oder 4. bis 8. Nebengruppe mit wenigstens einem Element ausgewählt aus der Gruppe bestehend aus Sauerstoff, Schwefel, Bor, Phosphor, Kohlenstoff, Stickstoff, Wasserstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$,WC, ZnO, $Al_2O_3$, AlO(OH), $ZrO_2$, $Sb_2O_3$, $SiO_2$, Eisenoxide, $Na_2SO_4$, $BaSO_4$, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Pfropfkautschuke mit Dispersionen, Suspensionen, Pasten oder Solen der feinstteiligen anorganischen Materialien dar.

Die erfindungsgemäßen Formmassen können 0,01 bis 20 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Alhydroxid, anorganische Verbindungen wie Aluminiumoxide, Titandioxide, Antimonoxide, Barium-metaborat, Hydroxoantimonat, Zirkonoxid, Zirkonhydroxid, Molybdenoxid, Ammoniummolyybdat, Zinkborat, Ammoniumborat, und Zinnoxid sowie Siloxanverbindungen.

Die erfindungsgemäßen Formmassen enthaltend die Komponenten A bis F und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der oben erwähnten koagulierten Mischung eingesetzt wird. Bevorzugte Aggregate sind Extruder und Doppelwellenschnecken.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern durch Spritzguß verwendet werden. Beispiele für herstellbare Formkörper sind: Gehäuseteile jeder Art, z.B. für Haushaltsgeräte wie Saftpressen, Kaffeemaschinen, Mixer, für Büromaschinen wie Monitore, Drucker, Kopierer oder Abdeckplatten für den Bausektor und Teile für den Kfz-Sektor. Sie werden außerdem auf dem Gebiet der Elektrotechnik-eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Die erfindungsgemäßen thermoplastischen Formmassen eignen sich aufgrund ihrer ausgezeichneten Flammfestigkeit, ihrer sehr guten Verarbeitungseigenschaft und ihrer sehr guten mechanischen Eigenschaften, insbesondere ihrer herausragenden Steifigkeit, zur Herstellung von Formkörpern jeglicher Art, insbesondere solchen mit erhöhten Anforderungen an Bruchbeständigkeit.

Ein weiterer Gegenstand der vorliegenden Erfindung ist daher auch die Verwendung der erfindungsgemäßen Formmassen zur Herstellung von Formkörpern jeglicher Art, vorzugsweise der obengenannten sowie die Formkörper aus den erfindungsgemäßen Formmassen.

## Beispiele

## Komponente A

### A

Lineares Polycarbonat auf Basis Bisphenol A mit einer relativen Lösungsviskosität von 1,249, gemessen in $CH_2Cl_2$ als Lösungsmittel bei 25°C und einer Konzentration von 0,5g/100 ml.

### A.1

Lineares Polycarbonat auf Basis Bisphenol A mit einer relativen Lösungsviskosität von 1,26, gemessen in $CH_2Cl_2$ als Lösungsmittel bei 25°C und in einer Konzentration von 0,5 g/100 ml.

### A.2

Lineares Polycarbonat auf Basis Bisphenol A mit einer relativen Lösungsviskosität von 1,19, gemessen in $CH_2Cl_2$ als Lösungsmittel bei 25°C und in einer Konzentration von 0,5 g/100 ml.

## Komponente C

Pfropfpolymerisat von 45 Gew.-Teilen eines Copolymerisats aus Styrol und Acrylnitril im Verhältnis von 72: 28 auf 55 Gew.-Teile teilchenförmigen vernetzten Polybutadienkautschuk (mittlerer Teilchendurchmesser $d_{50}$ = 0,4µm), hergestellt durch Emulsionspolymerisation.

**Komponente D**

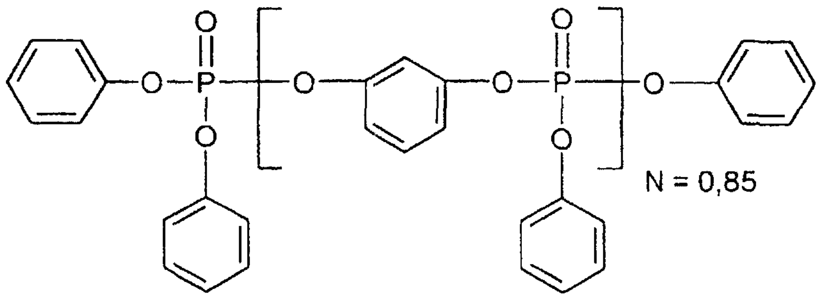

N = 0,85

**Komponente E**

Tetrafluorethylenpolymerisat als koagulierte Mischung aus einer Pfropfpolymerisat-Emulsion gemäß Komponente C in Wasser und einer Tetrafluorethylenpolymerisat-Emulsion in Wasser. Das Gewichtsverhältnis Pfropfpolymerisat C zum Tetrafluorethylenpolymerisat E in der Mischung ist 90 Gew.-% zu 10Gew.-%. Die Tetrafluorethylenpolymerisat-Emulsion besitzt einen Feststoffgehalt von 60 Gew.-%, der mittlere Teilchendurchmesser liegt zwischen 0,05 und 0,5µm. Die SAN-Pfropfpolymerisat-Emulsion besitzt einen Feststoffgehalt von 34 Gew.-% und einen mittleren Latexteilchendurchmesser von 0,4µm.

**Herstellung von E**

Die Emulsion des Tetrafluorethylenpolymerisats (Teflon 30 N der Fa. DuPont) wird mit der Emulsion des Pfropfpolymerisats C vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Komponente F**

Glasfasern (CS 7942, Fa. Bayer AG, Leverkusen, Deutschland) (geschnitten, durchschnittliche Länge 4,5 mm)

**Herstellung und Prüfung der erfindungsgemäßen Formmassen**

Das Mischen der Komponenten A bis F mit den üblichen Verarbeitungshilfsmitteln erfolgt auf einer Doppelwellenextruder ZSK 32. Die Formkörper werden auf einer Spritzgießmaschine Typ Arburg 270E bei 260°C hergestellt.

Die Bestimmung der Kerbschlagzähigkeit erfolgt nach Methode ISO 180 1A an Stäben der Abmessung 80 x 10 x 4 $mm^3$ bei Raumtemperatur.

Die Bestimmung der Wärmeformbeständigkeit nach Vicat B erfolgt gemäß DIN 53 460 an Stäben der Abmessung 80 x 10 x 4 $mm^3$.

Die Bestimmung des Zug E-Moduls erfolgt nach ISO 527/DIN 53 457.

Die Flammwidrigkeit wird nach UL94V bestimmt.

Dabei wird das Brandverhalten der Proben nach UL-Subj. 94V an Stäben der Abmessung 127 mm x 12,7 mm x 3,2 mm bzw. 1,6 mm gemessen.

Die Stäbe werden vertikal so montiert, daß die Unterseite des Probekörpers sich 305 mm über einem Streifen Verbandstoff befindet. Jeder Probestab wird einzeln mittels zweier aufeinanderfolgenden Zündvorgängen von 10 s Dauer entzündet. Die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ kJ/$m^3$ (1000 BTU per cubic foot) benutzt.

Zur Beurteilung des Brandverhaltens wird jeder Probenkörper zweimal für die Dauer von jeweils 10 s beflammt. Nach dem Entfernen der Zündquelle wird die Nachbrennzeit gemessen. Für jeden Versuch werden fünf Probekörper verwendet und die 10 Einzelbrennzeiten sowie die Summe der Einzelnachbrennzeiten ermittelt.

Die Zusammensetzung der geprüften Materialien sowie die erhaltenen Daten sind in der folgenden Tabelle 1 zusammengefaßt.

Tabelle 1

| Zusammensetzung und Eigenschaften der Polycarbonat-ABS-Formmassen | | |
|---|---|---|
| Beispiel | 1<br>Vergleich | 2<br>erfindungsgemäß |
| **Komponenten [Gew.-Teile]** | | |
| A | 70 | - |
| A1 und A2 | - | 70:<br>davon A1 85,7Gew.-%<br>A2 14,3 Gew.-% |
| C | 5 | 5 |
| D | 11 | 11 |
| E | 4 | 4 |
| F | 10 | 10 |
| **Eigenschaften:** | | |
| Vicat B [°C] | 97 | 96 |
| Kerbschlagzähigkeit [$kJ/m^2$] | 5 | 8 |
| Schmelzviskosität bei 260°C [Pa.s] | | |
| bei 100 $s^{-1}$ | 539 | 440 |
| bei 1000 $s^{-1}$ | 275 | 241 |
| bei 1500 $s^{-1}$ | 223 | 193 |
| MVR 240°C/5 kg [ml/10 min] | 16,2 | 17,6 |
| Zug-E-Modul [$N/mm^2$] | 3293 | 3349 |
| UL 94 V 3,2 mm/RT | VO | VO |
| Gesamt-Nachbrennzeit (s) | 13 | 4 |
| UL 94 V 1,6 mm/RT | VO | VO |
| Gesamt-Nachbrennzeit (s) | 15 | 9 |

## Patentansprüche

**1.** Flammwidrige, verstärkte, thermoplastische Formmassen enthaltend

A. 5 bis 95 Gew.-Teile eines Gemisches zweier aromatischer Polycarbonate A.1 und A.2 mit unterschiedlicher Lösungsviskosität, wobei

1. die relative Lösungsviskosität von A.1 1,18 bis 1,24 beträgt,

2. die relative Lösungsviskosität von A.2 1,24 bis 1,34 beträgt und

3. die Differenz der relativen Lösungsviskositäten von A.1 und A.2 größer oder gleich 0,06 ist, wobei die relative Lösungsviskosität jeweils in $CH_2Cl_2$ als Lösungsmittel bei 25°C bei einer Konzentration von 0,5 g/100 ml gemessen wird,

wobei ein oder mehrere weitere Polycarbonate dem Gemisch aus A.1 und A.2 zugesetzt werden können,

B. 0 bis 50 Gew.-Teile Vinyl(co)polymerisat aus einem oder wenigstens zwei ethylenisch ungesättigten Monomeren,

C. 0,5 bis 60 Gew.-Teile Pfropfpolymerisat erhältlich durch Pfropfpolymerisation von mindestens 2 der Monomeren ausgewählt aus Chloropren, Butadien, Isopren, Styrol, Acrylnitril, Ethylen, Propylen, Vinylacetat und (Meth)-Acrylsäure-$C_1$-$C_{18}$-alkylester,

D. 0,5 bis 20 Gew.-Teile Phosphorverbindung der Formel (I)

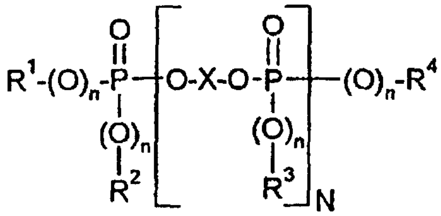

(I),

worin

$R^1$, $R^2$, $R^3$ und $R^4$ unabhängig voneinander, jeweils gegebenenfalls halogeniertes $C_1$-$C_4$-Alkyl, jeweils gegebenenfalls durch Halogen und/oder $C_1$-$C_4$-Alkyl substituiertes, $C_5$-$C_6$-Cycloalkyl, $C_6$-$C_{20}$-Aryl oder $C_7$-$C_{12}$-Aralkyl,

n unabhängig voneinander 0 oder 1,

N 0 bis 30 und

X einen ein- oder mehrkernigen aromatischen Rest mit 6 bis 30 C-Atomen bedeuten,

E. 0,05 bis 5 Gew.-Teile wenigstens fluoriertes Polyolefin und

F. 1 bis 40 Gew.-Teile anorganisches Verstärkungsmaterial,

wobei die Summe der Gew.-Teile A, B, C, D, E und F 100 Gew.-Teile beträgt.

**2.** Formmassen nach Anspruch 1, wobei N in Formel (I) einen Wert von 0,3 bis 20 aufweist.

**3.** Formmassen gemäß Ansprüche 1 bis 2, wobei in Formel (I) $R^1$, $R^2$, $R^3$ und $R^4$ jeweils unabhängig voneinander $C_1$-$C_4$-Alkyl, jeweils gegebenenfalls mit Halogen- und/oder Alkylgruppen substituiertes $C_6$-$C_{10}$-Aryl oder Phenyl-$C_1$-$C_4$-alkyl bedeutet und X sich von Diphenolen, ausgewählt aus Bisphenol A, Resorcin oder Hydrochinon, gegebenenfalls chloriert oder bromiert, ableitet.

**4.** Formmassen nach einem der Ansprüche 1 bis 3, wobei die Monophosphorverbindung der Formel (I) ausgewählt ist aus Tributylphosphat, Tris-(2-chlorethyl)-phosphat, Tris-(2,3-dibrompropyl)-phosphat, Triphenylphosphat, Trikresylphosphat, Diphenylkresylyphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und/oder Trikresylphosphinoxid.

**5.** Formmassen nach Anspruch 4, wobei fluorierte Polyolefine E), Polytetrafluorethylen, Polyvinylidenfluorid, Tetrafluorethylen/Hexafluorpropylenund/oder Ethylen/Tetrafluorethylen-Copolymerisate eingesetzt sind.

**6.** Formmassen gemäß einem oder mehreren der vorhergehenden Ansprüche, wobei Komponente A aromatische Polycarbonate auf Basis der Diphenole der Formel (II) sind

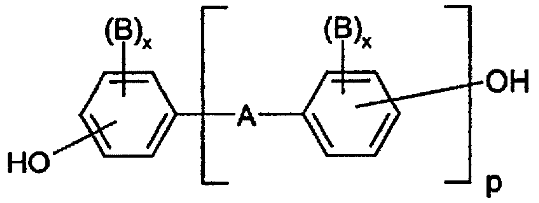

(II),

worin

A eine Einfachbindung, $C_1$-$C_5$-Alkylen, $C_2$-$C_5$-Alkyliden, $C_5$-$C_6$-Cycloalkyliden, -S-, -$SO_2$-, -O-, -CO- oder ein $C_6$-$C_{12}$-Arylen-Rest, der gegebenenfalls mit weiteren, Heteroatome enthaltenden aromatischen Ringen kondensiert sein kann,

B unabhängig voneinander, jeweils $C_1$-$C_8$-Alkyl, $C_6$-$C_{10}$-Aryl, $C_7$-$C_{12}$-Aralkyl, oder Halogen

x unabhängig voneinander, jeweils 0, 1 oder 2 und

p 1 oder 0 bedeuten,

oder alkylsubstituierte Dihydroxyphenylcycloalkane der Formel (III)

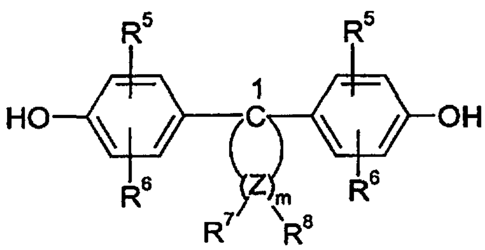

(III),

worin

$R^5$ und $R^6$ unabhängig voneinander, jeweils Wasserstoff, Halogen, $C_1$-$C_8$-Alkyl, $C_5$-$C_6$-Cycloalkyl, $C_6$-$C_{10}$-Aryl, oder $C_7$-$C_{12}$-Aralkyl,

m eine ganze Zahl von 4 bis 7,

$R^7$ und $R^8$ für jedes Z individuell wählbar, unabhängig voneinander Wasserstoff oder $C_1$-$C_6$-Alkyl, und

Z Kohlenstoff bedeutet, mit der Maßgabe, daß an mindestens einem Atom Z $R^7$ und $R^8$ gleichzeitig Alkyl bedeuten.

**7.** Formmassen gemäß einem oder mehrerer der vorhergehenden Ansprüche, wobei mindestens eines der aromatischen Polycarbonate der Komponente A Polysiloxanblöcke enthalten und/oder teilweise durch aromatische Polyestercarbonate ersetzt sind.

**8.** Formmassen nach einem der vorhergehenden Ansprüche, wobei das anorganische Verstärkungsmaterial ausgewählt ist aus gegebenenfalls geschnittenen oder gemahlenen Glasfasern, Glasperlen, Kohlefasern, blättchenförmiges Verstärkungsmaterial oder deren Mischung.

**9.** Formmassen nach den vorhergehenden Ansprüchen, welche bis zu 20 Gew.-%, bezogen auf die Gesamtformmasse, wenigstens eines weiteren Flammschutzmittels enthalten.

**10.** Formmassen nach einem der vorhergehenden Ansprüche, enthaltend 10 bis 90 Gew.-Teile der Komponente A, 1 bis 40 Gew.-Teile der Komponente C, 1 bis 18 Gew.-Teile der Komponente D und 3 bis 30 Gew.-Teile der Komponente F.

**11.** Formmassen nach einem der vorhergehenden Ansprüche, enthaltend 20 bis 80 Gew.-Teile der Komponente A, 2 bis 30 Gew.-Teile der Komponente C, 2 bis 15 Gew.-Teile der Komponente D und 5 bis 20 Gew.-Teile der Komponente F.

**12.** Formmassen gemäß der vorhergehenden Ansprüche, wobei Komponente B ein (Co)Polymerisat aus

B.1 50 bis 99 Gew.-Teilen Monomer ausgewählt aus Styrol, α-Methylstyrol, kernsubstituiertem Styrol und/oder Methylmethacrylat und

B.2 1 bis 50 Gew.-Teilen Monomer ausgewählt aus Acrylnitril, Methacrylnitril, Methylmethacrylat, Maleinsäureanhydrid und/oder N-Alkyl oder N-Aryl substituiertem Maleinimid

ist.

**13.** Formmasse gemäß der vorhergehenden Ansprüche, wobei Komponente C ein Pfropfpolymerisat ist, erhältlich durch Pfropfpolymerisation von

C.1 5 bis 95 Gew.-Teilen einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-Alkyl bzw. Phenyl-N-substituierten Maleinimiden oder Mischungen dieser Verbindungen auf

C.2 5 bis 95 Gew.-Teilen Polymerisat auf Dien- und/oder Alkylacrylat-Basis mit einer Glasübergangstemperatur kleiner -10°C.

**14.** Formmassen gemäß einem der vorgehenden Ansprüche, enthaltend eine feinstteilige Verbindung der 1. bis 5. Hauptgruppe oder der 1. bis 8. Nebengruppe des Periodensystems mit mindestens einem Element ausgewählt aus der Gruppe bestehend aus Sauerstoff, Schwefel, Bor, Kohlenstoff, Phosphor, Stickstoff, Wasserstoff und Silizium.

**15.** Formmassen nach einem der vorhergehenden Ansprüche, **dadurch gekennzeichnet, daß** sie mindestens einen Zusatz aus der Gruppe der Stabilisatoren, Pigmente, Entformungsmittel, Fließmittel und/oder Antistatika enthalten.

**16.** Verwendung der Formmassen nach einem der vorhergehenden Ansprüche zur Herstellung von Formkörpern.

**17.** Formkörper hergestellt aus Formmassen nach einem der vorhergehenden Ansprüche.

## Claims

**1.** Flame-retardant, reinforced thermoplastic moulding compositions containing

A. 5 to 95 parts by weight of a mixture of two aromatic polycarbonates A.1 and A.2 with different solution viscosities, wherein

1. the relative solution viscosity of A.1 is 1.18 to 1.24,

2. the relative solution viscosity of A.2 is 1.24 to 1.34, and

3. the difference between the relative solution viscosities of A.1 and A.2 is greater than or equal to 0.06, wherein the relative solution viscosity is measured in each case in $CH_2Cl_2$ as the solvent at 25°C and at a concentration of 0.5 g/100 ml,

wherein one or more further polycarbonates can be added to the mixture of A.1 and A.2,

B. 0 to 50 parts by weight of a vinyl (co)polymer of one or of at least two ethylenically unsaturated monomers,

C. 0.5 to 60 parts by weight of a graft polymer obtainable by the graft polymerisation of at least 2 of the monomers selected from chloroprene, butadiene, isoprene, styrene, acrylonitrile, ethylene, propylene, vinyl acetate and $C_1$-$C_{18}$ alkyl esters of (meth)acrylic acid,

D. 0.5 to 20 parts by weight of a phosphorus compound of formula (I)

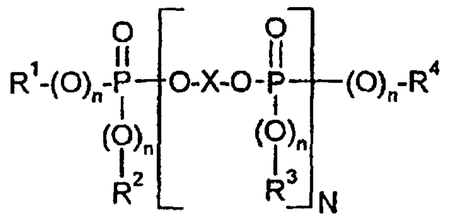

(I),

wherein

| | |
|---|---|
| $R^1$, $R^2$, $R^3$ and $R^4$, | independently of each other, denote a $C_1$-$C_4$ alkyl, each of which is optionally halogenated, or a $C_5$-$C_6$ cycloalkyl, $C_6$-$C_{20}$ aryl or $C_7$-$C_{12}$ aralkyl, each of which is optionally substituted by a halogen and/or by a $C_1$-$C_4$ alkyl, |
| n | denotes 0 or 1, which are independent of each other, |
| N | denotes 0 to 30, and |
| X | denotes a mono- or polynuclear aromatic radical containing 6 to 30 C atoms, |

E. 0.05 to 5 parts by weight of at least one fluorinated polyolefine, and

F. 1 to 40 parts by weight of an inorganic reinforcing material,

wherein the sum of the parts by weight of A, B, C, D, E and F amounts to 100 parts by weight.

**2.** Moulding compositions according to claim 1, wherein N in formula (I) has a value of 0.3 to 20.

**3.** Moulding compositions according to claims 1 or 2, wherein $R^1$, $R^2$, $R^3$ and $R^4$ in formula (I), independently of each other in each case, denote a $C_1$-$C_4$ alkyl, or a $C_6$-$C_{10}$ aryl or a phenyl-$C_1$-$C_4$ alkyl, each of which is optionally substituted by a halogen and/or alkyl groups, and X is derived from diphenols which are selected from bisphenol A, resorcinol or hydroquinone and which are optionally chlorinated or brominated.

**4.** Moulding compositions according to any one of claims 1 to 3, wherein the monophosphorus compound of formula (I) is selected from tributyl phosphate, tris-(2-chloroethyl) phosphate, tris-(2,3-dibromopropyl) phosphate, triphenyl phosphate, tricresyl phosphate, diphenylcresyl phosphate, diphenyl-octyl phosphate, diphenyl-2-ethylcresyl phosphate, tri(isopropylphenyl) phosphate, halogen-substituted aryl phosphates, methylphosphonic acid dimethyl ester, methylphosphonic acid diphenyl ester, phenylphosphonic acid diethyl ester, triphenylphosphine oxide and/or tricresyl phosphine oxide.

**5.** Moulding compositions according to claim 4, wherein polytetrafluoroethylene, polyvinylidene fluoride, or tetrafluoroethylene/hexafluoropropylene and/or ethylene/tetrafluoroethylene copolymers are used as fluorinated polyolefine

E).

**6.** Moulding compositions according to one or more of the preceding claims, wherein component A comprises aromatic polycarbonates based on diphenols of formula (II)

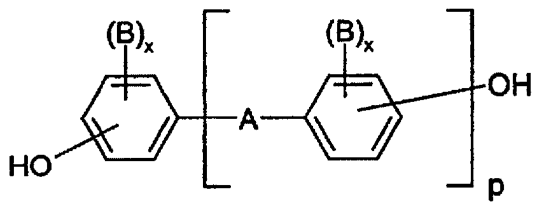

(II),

wherein

A denotes a single bond, a $C_1$-$C_5$ alkylene, a $C_2$-$C_5$ alkylidene, a $C_5$-$C_6$ cycloalkylidene, -S-, -$SO_2$-, -O-, -CO- or a $C_6$-$C_{12}$ arylene radical, which can optionally be condensed with other aromatic rings containing hetero atoms,

B denotes entities which are independent of each other and which each represent a $C_1$-$C_8$ alkyl, a $C_6$-$C_{10}$ aryl, a $C_7$-$C_{12}$ aralkyl or a halogen,

x denotes 0, 1 or 2, which are independent of each other, and

p denotes 1 or 0,

or alkyl-substituted dihydroxyphenylcycloalkanes of formula (III)

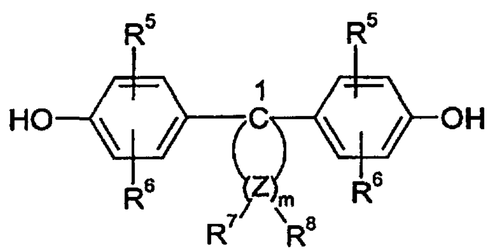

(III),

wherein

$R^5$ and $R^6$, independently of each other, each denote hydrogen, a halogen, a $C_1$-$C_8$ alkyl, a $C_5$-$C_6$ cycloalkyl, a $C_6$-$C_{10}$ aryl or a $C_7$-$C_{12}$ aralkyl,

m denotes an integer from 4 to 7,

$R^7$ and $R^8$ can be selected individually for each Z, and independently of each other denote hydrogen or a $C_1$-$C_6$-alkyl, and

Z denotes carbon, with the proviso that $R^7$ and $R^8$ simultaneously denote alkyl on at least one Z atom.

**7.** Moulding compositions according to one or more of the preceding claims, wherein at least one of the aromatic polycarbonates of component A contains polysiloxane blocks and/or is partially replaced by aromatic polyester carbonates.

**8.** Moulding compositions according to any one of the preceding claims, wherein the inorganic reinforcing material is selected from glass fibres which are optionally chopped or milled, glass beads, carbon fibres, a lamellar reinforcing material or a mixture thereof.

**9.** Moulding compositions according to any one of the preceding claims, which contain up to 20 % by weight, with respect to the total moulding composition, of at least one other flame retardant.

**10.** Moulding compositions according to any one of the preceding claims, containing 10 to 90 parts by weight of component A, 1 to 40 parts by weight of component C, 1 to 18 parts by weight of component D and 3 to 30 parts by weight of component F.

**11.** Moulding compositions according to any one of the preceding claims, containing 20 to 80 parts by weight of component A, 2 to 30 parts by weight of component C, 2 to 15 parts by weight of component D and 5 to 20 parts by weight of component F.

**12.** Moulding compositions according to the preceding claims, wherein component B is a (co)polymer of

B.1 50 to 99 parts by weight of a monomer selected from styrene, α-methyl-styrene, a styrene comprising a substituted nucleus, and/or methyl methacrylate, and
B.2 1 to 50 parts by weight of a monomer selected from acrylonitrile, methacrylonitrile, methyl methacrylate, maleic anhydride and/or an N-alkyl- or N-aryl-substituted maleinimide.

**13.** A moulding composition according to the preceding claims, wherein component C is a graft polymer obtainable by the graft polymerisation of

C. 1 5 to 95 parts by weight of a mixture of

C.1.1 50 to 99 parts by weight of styrene, α-methylstyrene, styrenes comprising nuclei substituted by a halogen or methyl, methyl methacrylate or mixtures of these compounds, and

C.1.2 1 to 50 parts by weight of acrylonitrile, methacrylonitrile, methyl methacrylate, maleic anhydride, $C_1$-$C_4$-alkyl- or phenyl-N-substituted maleinimides or mixtures of these compounds, on

C.2 5 to 95 parts by weight of a diene- or alkyl acrylate-based polymer with a glass transition temperature less than -10°C.

**14.** Moulding compositions according to any one of the preceding claims, containing a very finely divided compound of main groups 1 to 5 or subgroups 1 to 8 of the periodic table comprising at least one element selected from the group consisting of oxygen, sulphur, boron, carbon, phosphorus, nitrogen, hydrogen and silicon.

**15.** Moulding compositions according to any one of the preceding claims, **characterised in that** they contain at least one additive from the group comprising stabilisers, pigments, demoulding agents, flow enhancers and/or antistatic agents.

**16.** Use of the moulding compositions according to any one of the preceding claims for producing mouldings.

**17.** Mouldings produced from moulding compositions according to any one of the preceding claims.

**Revendications**

**1.** Matières à mouler thermoplastiques renforcées ignifuges contenant

A. 5 à 95 parties en poids d'un mélange de deux polycarbonates aromatiques A.1 et A.2 ayant des viscosités différentes en solution, à savoir

1. 1,18 à 1,24 pour la viscosité relative en solution de A.1,
2. 1,24 à 1,34 pour la viscosité relative en solution de A.2 et
3. la différence entre les viscosités relatives en solution de A.1 et A.2 est supérieure ou égale à 0,06, la viscosité relative en solution étant mesurée dans tous les cas dans CH2Cl2 qui sert de solvant à 25°C et à une concentration de 0,5 g/100 ml,

un ou plusieurs autres polycarbonates pouvant être ajoutés au mélange de A.1 et A.2,

B. 0 à 50 parties en poids d'un (co)polymère vinylique d'un ou d'au moins deux monomères à insaturation éthylénique,

C. 0,5 à 60 parties en poids d'un polymère greffé obtenu par polymérisation greffée d'au moins deux monomères choisis dans le groupe consistant en le chloroprène, le butadiène, l'isoprène, le styrène, l'acrylonitrile, l'éthylène, le propylène, l'acétate de vinyle et les (méth)acrylates d'alkyle en $C_1$-$C_{18}$,

D. 0,5 à 20 parties en poids d'un dérivé phosphoré de formule (I)

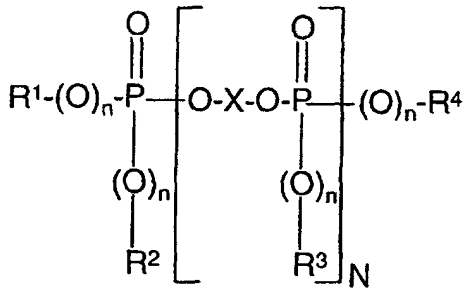

(I),

dans laquelle

| | |
|---|---|
| $R^1$, $R^2$, $R^3$ et $R^4$ | représentent chacun, indépendamment les uns des autres, un groupe alkyle en $C_1$-$C_4$ éventuellement halogéné, un groupe cycloalkyle en $C_5$-$C_6$, aryle en $C_6$-$C_{20}$ ou aralkyle en $C_7$-$C_{12}$, éventuellement substitué par des halogènes et/ou des groupes alkyle en $C_1$-$C_4$, |
| les indices n | sont égaux chacun, indépendamment les uns des autres, à 0 ou 1, |
| N | a une valeur de 0 à 30 et |
| X | représente un radical aromatique mono- ou poly-cyclique en $C_6$-$C_{30}$, |

E. 0,05 à 5 parties en poids d'au moins une polyoléfine fluorée et

F. 1 à 40 parties en poids d'une matière renforçante minérale, la somme des parties en poids de A, B, C, D, E, F représentant 100 parties en poids.

**2.** Matières à mouler selon la revendication 1, pour lesquelles N de la formule (I) a une valeur de 0,3 à 20.

**3.** Matières à mouler selon les revendications 1 à 2, pour lesquelles, dans la formule (I), $R^1$, $R^2$, $R^3$ et $R^4$ représentent chacun, indépendamment les uns des autres, un groupe alkyle en $C_1$-$C_4$, un groupe aryle en $C_6$-$C_{10}$ ou phénylalkyle en $C_1$-$C_4$, chacun éventuellement substitué par des halogènes et/ou des groupes alkyle, et X dérive de diphénols choisis parmi le bisphénol A, le résorcinol et l'hydroquinone, éventuellement chlorés ou bromés.

**4.** Matières à mouler selon l'une des revendications 1 à 3, pour lesquelles le dérivé monophosphoré de formule (I) est choisi parmi le phosphate de tributyle, le phosphate de tris-(2-chloréthyl), le phosphate de tris-(2,3-dibromopropyle), le phosphate de triphényle, le phosphate de tricrésyle, le phosphate de diphényle et de crésyle, le phosphate et diphényle et d'octyle, le phosphate de diphényle et de 2-éthylcrésyle, le phosphate de tri-(isopropylphényle), les phosphates d'aryle à substituants halogéno, le méthylphosphonate de diméthyle, le méthylphosphonate de diphényle, le phénylphosphonate de diéthyle, l'oxyde de triphénylphosphine et/ou l'oxyde de tricrésylphosphine.

**5.** Matières à mouler selon la revendication 4, pour lesquelles la polyoléfine fluorée E consiste en polytétrafluoréthylène, fluorure de polyvinylidène, copolymères tétrafluoréthylène/hexafluoropropylène et/ou éthylène/tétrafluoréthylène.

**6.** Matières à mouler selon une ou plusieurs des revendications qui précèdent, pour lesquelles le composant A consiste en polycarbonates aromatiques à base de diphénols de formule (II)

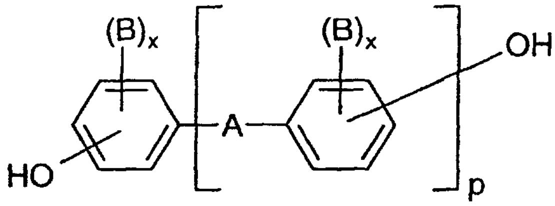

(II)

dans laquelle

| | |
|---|---|
| A | représente une liaison simple, un groupe alkylène en $C_1$-$C_5$, alkylidène en $C_2$-$C_5$, cycloalkylidène en $C_5$-$C_6$, -S-, -$SO_2$-, -O-, -CO- ou un groupe arylène en $C_6$-$C_{12}$, qui peut le cas échéant être condensé avec d'autres cycles aromatiques contenant des hétéroatomes, |
| les symboles B | représentent chacun, indépendamment les uns des autres, un groupe alkyle en $C_1$-$C_8$, aryle en $C_6$-$C_{10}$, aralkyle en $C_7$-$C_{12}$, ou un halogène, |
| les indices x | sont égaux chacun, indépendamment l'un de l'autre à 0, 1 ou 2, et |
| p | est égal à 1 ou 0, |

ou de dihydroxyphénylcycloalcanes à substituants alkyle de formule (III)

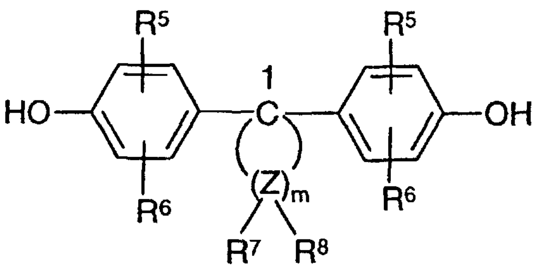

(III),

dans laquelle

| | |
|---|---|
| $R^5$ et $R^6$ | représentent chacun, indépendamment l'un de l'autre, l'hydrogène, un halogène, un groupe alkyle en $C_1$-$C_8$, cycloalkyle en $C_5$-$C_6$, aryle en $C_6$-$C_{10}$ ou aralkyle en $C_7$-$C_{12}$, |
| m | est un nombre entier allant de 4 à 7, |
| $R^7$ et $R^8$, | qui peuvent être choisis individuellement pour chacun des atomes Z, représentent chacun, indépendamment l'un de l'autre, l'hydrogène ou un groupe alkyle en $C_1$-$C_6$, et |
| Z | représente le carbone, sous réserve que sur au moins un atome Z, $R^7$ et $R^8$ représentent tous deux un groupe alkyle. |

7. Matières à mouler selon une ou plusieurs des revendications qui précèdent, pour lesquelles au moins un des polycarbonates aromatiques du composant A contient des blocs de polysiloxane et/ou est remplacé en partie par des polyester-carbonates aromatiques.

8. Matières à mouler selon l'une des revendications qui précèdent, pour lesquelles la matière renforçante minérale choisie consiste en fibres de verre éventuellement découpées ou broyées, perles de verre, fibres de carbone, une matière renforçante lamellaire ou leurs mélanges.

9. Matières à mouler selon les revendications qui précèdent, contenant jusqu'à 20 % de leur poids total d'au moins un autre agent ignifugeant.

10. Matières à mouler selon l'une des revendications qui précèdent, contenant 10 à 90 parties en poids du composant A, 1 à 40 parties en poids du composant C, 1 à 18 parties en poids du composant D et 3 à 30 parties en poids du composant F.

11. Matières à mouler selon l'une des revendications qui précèdent, contenant 20 à 80 parties en poids du composant

A, 2 à 30 parties en poids du composant C, 2 à 15 parties en poids du composant D et 5 à 20 parties en poids du composant F.

**12.** Matières à mouler selon les revendications qui précèdent, pour lesquelles le composant B est un (co)polymère de

B.1 50 à 99 parties en poids d'un monomère choisi parmi le styrène, l'α-méthylstyrène, un styrène substitué dans le noyau et/ou le méthacrylate de méthyle, et
B.2 1 à 50 parties en poids d'un monomère choisi parmi l'acrylonitrile, le méthacrylonitrile, le méthacrylate de méthyle, l'anhydride maléique et/ou un maléimide à substituant alkyle ou aryle à l'azote.

**13.** Matière à mouler selon les revendications qui précèdent, pour laquelle le composant C est un polymère greffé obtenu par polymérisation greffée de :

C.1 5 à 95 parties en poids d'un mélange de

C.1.1 50 à 99 parties en poids de styrène, d'α-méthylstyrène, de styrènes substitués dans le noyau par des halogènes ou des groupes méthyle, de méthacrylate de méthyle ou d'un mélange de ces composés et
C.1.2 1 à 50 parties en poids d'acrylonitrile, de méthacrylonitrile, de méthacrylate de méthyle, d'anhydride maléique, de maléimides à substituants alkyle en $C_1$-$C_4$ ou phényle à l'azote ou de mélanges de ces composés sur
C.2 5 à 95 parties en poids d'un polymère à base de diènes et/ou d'acrylates d'alkyle ayant une température de transition du second ordre inférieure à -10°C.

**14.** Matières à mouler selon l'une des revendications qui précèdent, contenant un composé à l'état de particules extrêmement fines du premier au cinquième groupe principal ou du premier au huitième sous-groupe de la classification périodique avec au moins un élément choisi dans le groupe consistant en l'oxygène, le soufre, le bore, le carbone, le phosphore, l'azote, l'hydrogène et le silicium.

**15.** Matières à mouler selon l'une des revendications qui précèdent, **caractérisées en ce qu'**elles contiennent au moins un additif pris dans le groupe des stabilisants, des pigments, des agents de démoulage, des agents fluidifiants et/ou des agents antistatiques.

**16.** Utilisation des matières à mouler selon une des revendications qui précèdent pour la fabrication d'objets moulés.

**17.** Objets moulés fabriqués à partir de matières à mouler selon une des revendications qui précèdent.